# EUROPEAN PATENT APPLICATION

(11) **EP 3 072 738 A1**
(43) Date of publication of application: **28.09.2016**
(21) Application number: 16160732.0
(22) Date of filing: 16.03.2016
(51) Int. Cl.: B60P 1/28, B62D 25/20

(54) **TIPPER BODY AND EARTH TRANSPORT MACHINE**

(30) Priority: 24.03.2015 FI 20155211
(71) Applicant: M-Components Oy, 13430 Hämeenlinna (FI)
(72) Inventor: Lemström, Juhani, 13430 Hämeenlinna (FI)
(74) Representative: Väisänen, Olli Jaakko

(57) **Abstract**

The objective of the invention is to improve the usability of a tipper body or earth transport machine. The tipper body (1) comprises a bottom (2) and sides (3, 4) connected to the bottom (2) as well as an end board (5), which together specify the load space (7), and in addition the bottom (2) comprises a honeycomb structure (22), which comprises an upper surface plate (20) fastened essentially only by its outer edges (27) to the honeycomb structure (22), a lower surface plate (21) and between these a number of intersecting support elements (23, 24), which contain a number of openings (25, 28), at least some which have been arranged to make the honeycomb structure (22) essentially elastic in the loading direction of the load space (7). Also includes a claim concerning the earth transport machine and a claim for a method for the reconditioning of the tipper body.

## Description

### Field of invention

The invention is related to tipper bodies, which are used for the transport of various types of soil materials such as blasted stone, crushed stone, sand or vegetable soil.

### Technical background

Here and in what follows the expression soil material is used to refer to materials taken from the crust of the Earth (from the solid rock layer) or from above it, in other words for example blasted stone or crushed stone (these soil materials are originally obtained from the crust of the Earth) as well as sand, vegetable soil and other types of soil (these soil materials are obtained from above the crust of the Earth).

In known tipper bodies, the hardened wear-resistant bottom plate or so-called wear plate is welded directly to the frame beams of the tipper body. The problem with these type of tipper bodies is that the bottom is damaged in connection with loading. The loading of heavy blasted stone in particular causes permanent deformations and fractures in the bottom plate and further in the other bottom structures of the tipper body, where they also impair the traffic and usage safety of the tipper body. Another problem related to these types of tipper bodies is that it is difficult to keep their load melted at sub-zero temperatures. At worst, the freezing of the load may tip over a truck that is tipping its load.

### Objective of invention

The objective in accordance with the first aspect of the invention is to improve the usability of a tipper body. This objective can be solved by means of a tipper body according to claim 1.

The objective in accordance with the second aspect of the invention is to improve the usability of an earth transport machine. This objective can be solved by means of an earth transport machine according to claim 15.

The dependent claims describe the advantageous aspects of the tipper body.

### Advantages of invention

When the tipper body comprises a bottom and sides connected to the bottom as well as an end board, which together specify the load space, and when the bottom of the tipper body comprises a honeycomb structure, which comprises an upper surface plate fastened essentially only by its outer edges to the honeycomb structure, a lower surface plate and between these a number of intersecting support elements, which contain a number of openings, at least some which have been arranged to make the honeycomb structure essentially elastic in the loading direction of the load space, it is possible to improve the usability of the tipper body by reducing the damaging of the tipper body and in this way also its need for service and maintenance, and on the other hand usability is improved by making the tipper body lighter in weight.

When the upper surface plate of the honeycomb structure of the tipper body is essentially convex to the direction of the load space, it is possible for the upper surface plate to deform elastically in line with a deformation wave travelling horizontally when it is being loaded, in which case it is possible to better reduce the damaging of the upper surface plate.

When the upper surface plate of the honeycomb structure of the tipper body is essentially cup-like to the direction of the load space, it is possible for the upper surface plate to deform elastically in line with a deformation wave travelling horizontally when it is being loaded, in which case it is possible to better reduce the damaging of the upper surface plate.

When the upper bottom plate is cup-like or convex, it is possible to improve the elasticity characteristics of the upper surface plate especially during loading by pre-tensioning the upper surface plate to be convex or cup-like.

When the upper bottom plate has been pre-tensioned to be cup-like or convex, it is possible for it to better withstand impacts and wear for example during loading especially when the upper surface plate of the honeycomb structure of the tipper body is a metal plate treated with a heat treatment method that increases hardness, such as hardening, or comprises such metal plate.

When the outer edges of the upper surface plate of the honeycomb structure of the tipper body have been connected to the honeycomb structure by means of a continuous welded joint, it is possible to fasten the outer surface plate to the honeycomb structure tightly, in which case for example water cannot get so easily into the honeycomb structure and on the other hand it is possible for exhaust gas to flow in a more controlled manner inside the honeycomb structure.

When at least some of the support elements in the honeycomb structure of the tipper body are longitudinal support elements with respect to the tipper body, in addition to which one or both of the longitudinal outer edges of the upper surface plate have been adapted to set essentially one upon the other with the upper edge of such longitudinal support element, in which case the longitudinal support element serves as a root support for the welded joint, it is possible to make the welded joint only on one side of the upper surface plate.

When the yield strength of the upper surface plate of the honeycomb structure of the tipper body has been selected so that it is greater than the deflecting force caused in the upper surface plate by a load with a mass of 1500 kg dropped onto the upper surface plate from a height of 1 m, it is possible to reduce the damaging of the upper surface plate, especially the damaging of a cup-like or convex pre-tensioned upper surface plate.

When the breaking strength of the support elements of the honeycomb structure of the tipper body has been selected so that it is greater than the deflecting force caused in the support elements by a load with a mass of 1500 kg dropped onto the upper surface plate from a height of 1 m, it is possible to efficiently absorb some of the kinetic energy caused by the loading on the honeycomb structure, and on the other hand, when the support elements of the elastic lattice honeycomb structure yield under the upper surface plate and support the upper surface plate, it is possible to use a thinner surface plate.

When the yield strength of the lower bottom plate of the honeycomb structure of the tipper body has been selected so that it is greater than the deflecting force caused in the lower bottom plate by a load with a mass of 1500 kg dropped onto the upper surface plate from a height of 1 m, it is possible to reduce the damaging of the lower bottom plate, which might impair the traffic and usage safety of the tipper body.

When the intersecting support elements of the honeycomb structure of the tipper body have been connected to each other by means of a form-restricted connection, most advantageously by means of a number of finger joints, it is possible to reduce the length and a-dimension of the welded joints and on the other hand the installation of the support elements is facilitated, when the intersecting support elements can be connected to each other before welding.

When the intersecting support elements of the honeycomb structure of the tipper body have been connected to each other at the upper and lower edge of the intersecting support elements by means of intermittent welds on both sides, which intermittent welds are most advantageously 2 - 5 cm in length, it is possible to decrease the weight of the tipper body and reduce the deformations and stresses in the honeycomb structure caused by welding.

When the support elements of the honeycomb structure of the tipper body have been connected to the lower surface plate at the intersecting support elements by means of intermittent welds on both sides, which intermittent welds are most advantageously 2 - 5 cm in length, it is possible to decrease the weight of the tipper body and reduce the deformations and stresses in the honeycomb structure caused by welding.

When one side or both sides of the tipper body comprise a honeycomb structure, which comprises an inner surface plate, an outer surface plate and between these a number of intersecting support elements, it is possible to make a structure that distributes the forces exerted on the side across the entire side.

When some of the support elements of the side or sides of the tipper body serve as an extension to the support elements of the honeycomb structure, most advantageously to the transversal support elements of the tipper body, it is possible to reduce the bending of the sides outwards.

When at least some of the support elements of the side or sides of the tipper body serving as an extension are of the same piece with the support elements of the honeycomb structure or are welded to them, it is possible to reduce the bending of the sides outwards.

When a number of openings of at least 5 cm² have been made in the support elements of the honeycomb structure of the sides of the tipper body, it is possible to implement the tipper body with a lighter weight.

When the openings in the support elements of the tipper body are essentially elliptic, such as most advantageously round or ellipses, superelliptic such as squircles, ovals or combinations of these, it is possible to reduce the damaging of the openings, which would be the result if the openings had sharp corners.

When the openings in the support elements of the tipper body have been placed in the support element in the longitudinal direction of the support element in parallel with each other or at least partially on top of each other, it is possible to better define the elasticity of the honeycomb structure and on the other hand also the rigidity of the tipper body by changing the number or location of the openings.

When the size of individual openings in the support elements of the tipper body is 5 - 400 cm², it is possible to better define the elasticity of the honeycomb structure and on the other hand also the rigidity of the tipper body by changing the size of the openings for example on the basis of the height of a support element and the tensions of the support elements.

When the openings in the support elements of the tipper body have been arranged so that they form at least one flow-through channel for warm exhaust gas to heat essentially the entire bottom and alternatively to also heat one side or both sides, it is possible to implement melting in the area of the entire bottom and sides of the tipper body.

When the tipper body comprises a number of frame beams to support the honeycomb structure of the bottom, it is possible to support the tipper body to the chassis of the truck from the frame beams.

When the frame beams of the tipper body or at least some of them have been embedded at least partially into the honeycomb structure of the bottom, is it possible to lower the total height and centre of gravity of the tipper body.

When the openings in the support elements of the tipper body are lower at the frame beam than outside the frame beam, it is possible to arrange the honeycomb structure to be elastic also at the frame beam and at the same time possibly even enable the flow of exhaust gas past the frame beam.

When the honeycomb structure of the bottom of the tipper body and alternatively also the honeycomb structure of one side or both sides has been assembled from at least one or more pre-assemblies before the installation of the upper surface plate, it is possible to build the tipper body both as a parametric product family and as a module-based product family, in which case it is possible for the tipper body to be built up of standard modules and changing modules. It is possible to vary the changing modules for example on the basis of a tipping arrangement existing in an earth transport machine used for the transport of the tipper body.

An earth transport machine in accordance with the second aspect of the invention comprises a truck or transport machine equipped with tipping and/or a tipper body front wall that pushes the load away, configured to move soil material, and in addition to this a tipper body in accordance with the first aspect of some objective, it is possible to improve the usability of the earth transport machine. It is possible for the usability of such an earth transport machine to improve in comparison with known earth transport machines by reducing the damaging of the tipper body as well as its need for service and maintenance.

### List of drawings

In what follows, the embodiments of the tipper body are presented in more detail by means of the exemplary applications shown in the enclosed drawings FIG 1 - FIG 9. Of the drawings:
- FIG 1: shows a perspective view of the tipper body viewed diagonally from above from the back from the right;
- FIG 2: shows a perspective view of the tipper body shown in FIG 1, where part of the upper surface plates of the honeycomb structure and part of the inner surface plate of the side have been removed;
- FIG 3: shows a cross-section III - III of the tipper body shown in FIG 1;
- FIG 4: shows a cross section IV - IV of the tipper body shown in FIG 1;
- FIG 5: shows a detail of the convexity of the upper surface plate in cross section III - III when the tipper body is empty;
- FIG 6: shows a detail of the deformation of the upper surface plate in cross section III - III when a load is exerted on the upper surface plate;
- FIG 7: shows a detail VII of the tipper body shown in FIG 2 of the openings in the support elements of the honeycomb structure, which openings are located between the joint of intersecting support elements;
- FIG 8: shows an alternative detail VIII of the tipper body shown in FIG 2 of the openings in the support elements of the honeycomb structure, which openings are located at the joint of intersecting plates of the honeycomb;
- FIG 9: shows an alternative detail of the tipper body shown in FIG 2 of the openings in the support elements of the honeycomb structure, which openings are located at least partially on top of each other.

The same reference numbers refer to the same technical characteristics in all drawings.

### Detailed description of the invention

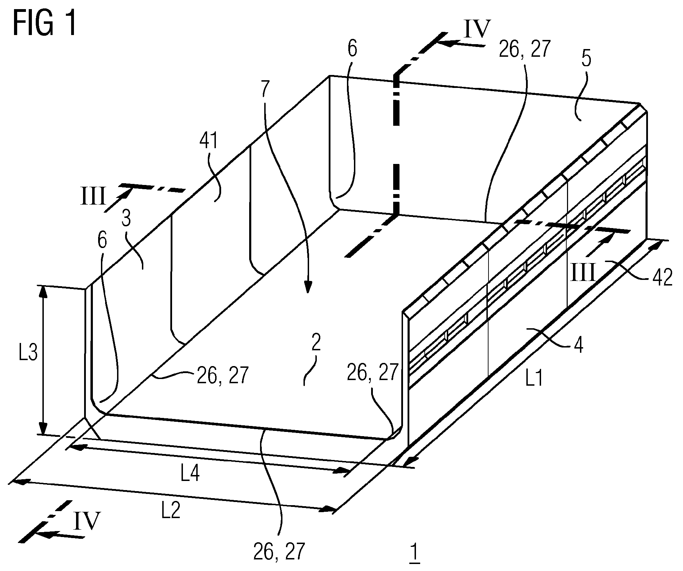

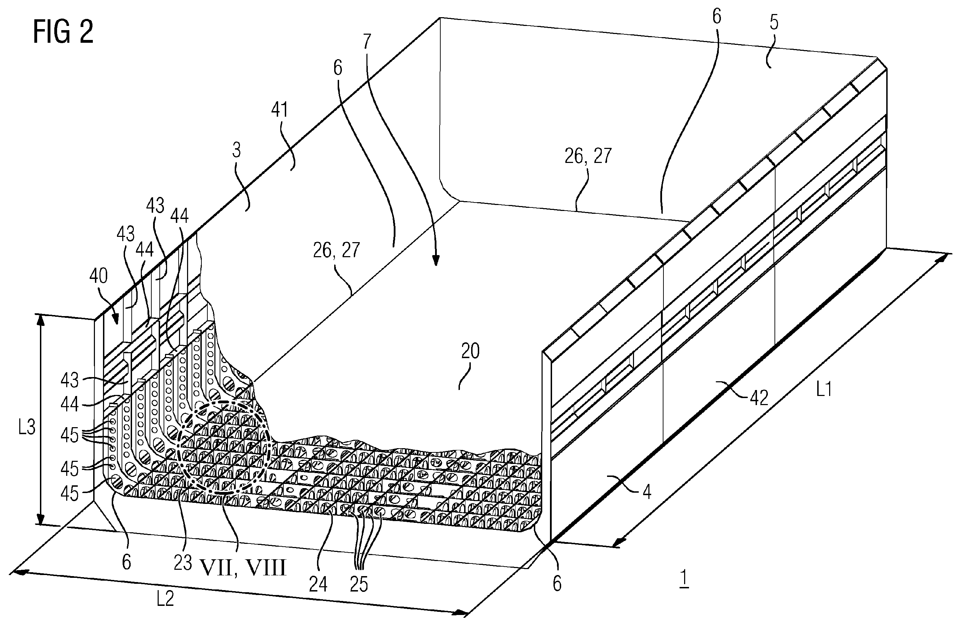

The drawings FIG 1 and 2 show a tipper body 1, which comprises a bottom 2 and sides 3, 4 connected to the bottom 2 as well as an end board 5. At the corner of the bottom 2 and sides 3, 4 as well as at the corner of the bottom 2 and end board 5 there is most advantageously a rounding 6, the radius of which can be 50 - 500 mm, most advantageously approx. 100 mm. FIG 2 shows a tipper body 1, which comprises a bottom 2 and sides 3, 4 connected to the bottom 2 as well as an end board 5, which together specify the load space 7, and also a honeycomb structure 22 of the bottom 2, which honeycomb structure 22 comprises an upper surface plate 20 fastened essentially only by its outer edges 27 to the honeycomb structure 22, a lower surface plate 21 and between these a number of intersecting support elements 23, 24, which contain a number of openings 25, 28, at least some which have been arranged to make the honeycomb structure 22 essentially elastic in the loading direction of the load space 7.

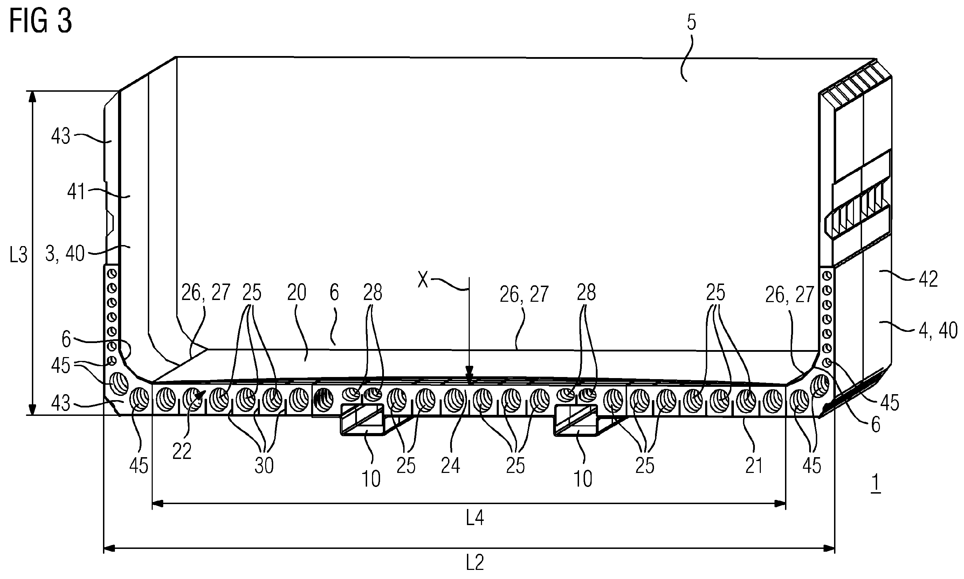

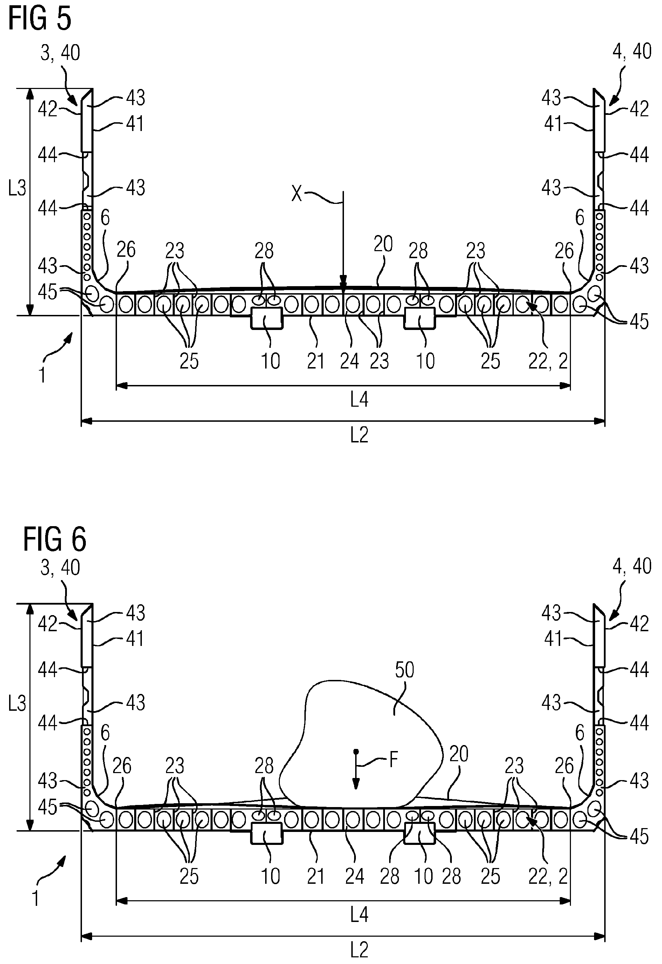

The upper surface plate 20 is most advantageously a hardened metal plate or comprises one. The upper surface plate 20 is most advantageously of wear-resistant steel, most preferably HARDOX® 500, and its thickness can be 3 - 10 mm, most advantageously 4 - 5 mm. HARDOX® is a trade mark registered to SSAB Oxelösund AB. The upper surface plate 20 of the honeycomb structure 22 is most preferably essentially convex or cup-like to the direction of the load space 7 (compare FIG 3 and FIG 5). The upper surface plate 20 has most advantageously been pre-tensioned to be convex or cup-like by means of chasing. The outer edges 27 of the upper surface plate 20 of the honeycomb structure 22 have been connected to the honeycomb structure 22 most preferably by means of a continuous welded joint. The welding is performed most advantageously by means of mig/mag welding from over the upper surface plate 20 from one side using a root gap.

At least some of the support elements 23 of the honeycomb structure 22 are most advantageously longitudinal support elements 23 with respect to the tipper body 1, in addition to which one or both of the longitudinal outer edges 27 of the upper surface plate 20 have most advantageously been adapted to set essentially one upon the other with the upper edge of such longitudinal support element 23, in which case the longitudinal support element 23 serves as a root support for the welded joint. When the upper surface plate 20 of the honeycomb structure 22 has been fastened to the honeycomb structure 22 only in the vicinity of the sides, no welded joints are needed in the upper surface plate 20 in the central loading area of the tipper body 1, which welded joints would weaken the hardness and yield strength of the upper surface plate 20. The welded seam of the fastening 26 is most advantageously at a distance of less than 300 mm from the inner surface plate 41 of the side (see FIG 6), in which case it is possible to reduce the hitting of for example large pieces of blasted stone to the welded fastening 26.

The material of the support elements 23, 24, 43, 44 is most advantageously of high-strength steel such as S650. The thickness of the support elements 23, 24, 43, 44 can be 3 - 10 mm, most advantageously 3 - 5 mm. The material of the lower surface plate 21 is most advantageously of hardened high-strength steel such as S650, and its thickness can be 3 - 10 mm, most advantageously 4 - 5 mm.

Most advantageously also one side 3, 4 or both sides 3, 4 comprise a honeycomb structure 40, which comprises an inner surface plate 41, an outer surface plate 42 and between these a number of intersecting support elements 44, 44. Some of the support elements 43 of the side 3, 4 or sides 3, 4 serve as an extension to the support elements 23 of the honeycomb structure 22, most advantageously to the transversal support elements 23 of the tipper body 1. At least some of the support elements 43 of the side 3, 4 or sides 3, 4 serving as an extension are of the same piece with the support elements 23 of the honeycomb structure 22 or are welded to them. A number of openings 45 of at least 5 cm² have been made in the support elements 43, 44 of the honeycomb structure 40 of the sides 3, 4.

Most advantageously the height L₃ of the entire side 3, 5 is of honeycomb structure 40. The material of the inner surface plate 41 is most advantageously of hardened wear-resistant steel, most preferably for example HARDOX® 400, and its thickness can be 3 - 8 mm, most advantageously 3 - 5 mm. The material of the outer surface plate 42 is most advantageously of hardened high-strength steel, such as S650, and its thickness can be 3 - 10 mm, most advantageously 3 - 5 mm. A number of openings 45 of at least 5 cm² have most preferably been made in the support elements 43, 44 of the honeycomb structure 40 of the sides 3, 4.

The honeycomb structure 22 of the tipper body 1 and alternatively also the honeycomb structure 40 of one or both sides 3, 4 have most advantageously been assembled from at least one or more pre-assemblies before the installation of the upper surface plate 20. It is possible for example to divide the tipper body 1 in the longitudinal direction into for example three or other number of various prefabricated products, in which case for example the use of a welding robot in welding is facilitated, when it is possible to decrease the reach requirement.

FIG 3 and FIG 5 show a cross section of a tipper body 1, where the upper surface plate 20 has most advantageously been connected to the honeycomb structure 22 only at the outer edges 27 so that the upper surface plate 20 is essentially cup-like or convex to the direction of the load 50. The cup-like convexity of the upper surface plate 20 is made most advantageously by chasing the upper surface plate 20 to bend in connection with the welding of the fastening 26. In this case, pre-tensioning is also created in the upper surface plate 20.

The distance X of the lower surface of upper surface plate 20 from the upper surface of the support elements 3, 4 of the honeycomb structure 22 can be 0 - 4% or 1 - 1.7% of the width L4 of the upper surface plate 20. Most advantageously X = 1.4% of the width L4 of the upper bottom plate 20.

The yield strength of the upper surface plate 20 of the honeycomb structure 22 has been selected so that it is greater than the deflecting force F caused in the upper surface plate 20 by a load 50 with a mass of 1500 kg dropped onto the upper surface plate 20 from a height of 1 m. In other words, most advantageously an elastic deformation is permitted in the upper surface plate. In the loading, the acceleration of the convex or cup-like upper surface plate 20 dampens the impact force of the load 50, and the elastic deformation of the pre-tensioned upper surface plate absorbs some of the kinetic energy of the load 50.

The breaking strength of the support elements 23, 2 of the honeycomb structure 22 has been selected so that it is greater than the deflecting force F caused in the support elements 23, 24 by a load 50 with a mass of 1500 kg dropped onto the upper surface plate 20 from a height of 1 m. In other words, most advantageously a plastic deformation is permitted in the support elements. The support elements 23, 24 absorb most advantageously most of the kinetic energy of the load 50 and can reduce the damaging of the lower surface plate. The transversal support elements 23 have most advantageously the dimension of the width L₂ of the tipper body 1, and the transversal support elements 23 have most advantageously the dimension of the width L₂ of the tipper body 1. The transversal support elements 23 of the honeycomb structure 22 continue on the side 3, 4 as support elements 43.

The yield strength of the lower surface plate 21 of the honeycomb structure 22 has been selected so that it is greater than the deflecting force F caused in the lower surface plate 21 by a load 50 with a mass of 1500 kg dropped onto the upper surface plate 20 from a height of 1 m. In other words, most advantageously an elastic deformation is permitted in the lower surface plate 21.

The tipper body 1 comprises a number of frame beams 10 to support the bottom 2 of the honeycomb structure 22. All frame beams 10 or at least some of them have been embedded at least partially into the honeycomb structure 22 of the bottom 2. The connection of the frame beams 10 to the honeycomb structure 22 is performed most advantageously by welding the frame beams 10 to the support elements 23, 24 of the honeycomb structure 22 by means of intermittent welds and to the lower bottom plate 21 by means of continuous welds. The openings 28 of the support elements 23, 24 are most advantageously lower at the frame beam 10.

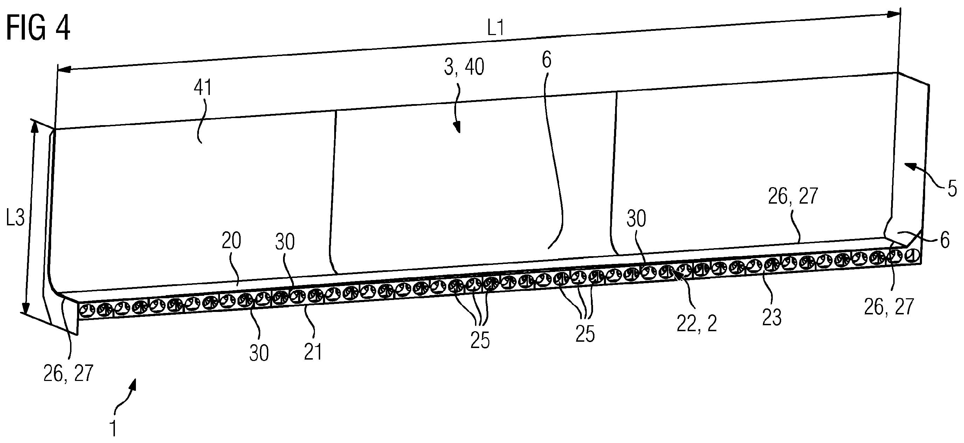

The drawing FIG 4 shows the longitudinal section IV - IV of the tipper body 1. The longitudinal support elements 23 of the honeycomb structure 22 are most preferably essentially of the dimension of the length L₁ of the entire tipper body 1.

Drawing 6 shows a situation where the upper surface plate 20 of the honeycomb structure 22 has been deformed by the force F caused by the load 50.

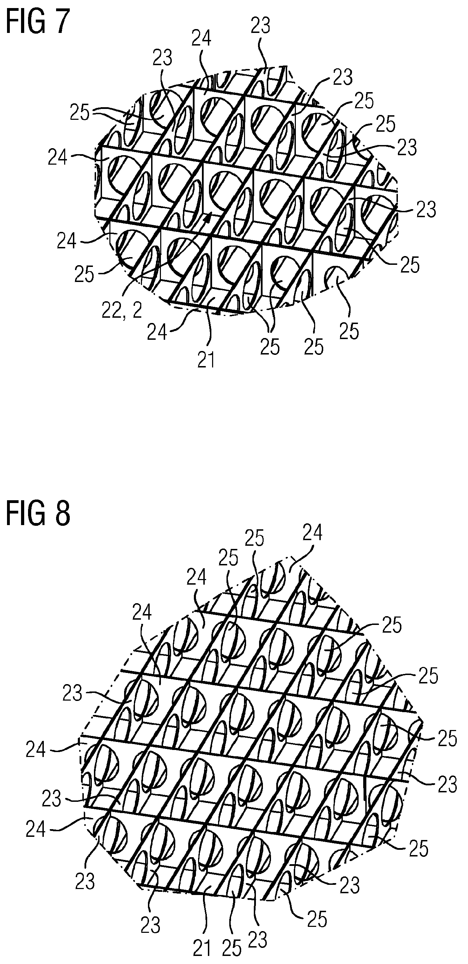

The drawings FIG 7 - 8 show details VII and VIII in more detail, in other words a more detailed advantageous method of implementation of the honeycomb structure 22 and especially its intersecting support elements 23, 24. The intersecting support elements 23, 24 of the honeycomb structure 22 have most advantageously been connected to each other by means of a form-restricted connection, such as by means of a number of finger joints 30.

The support elements 23, 24 have most advantageously been connected to each other at the upper and lower edge of the intersecting support elements 23, 24 by means of intermittent welds 29 on both sides, which intermittent welds 29 are most advantageously 2 - 5 cm in length. The support elements 43, 44 of the honeycomb structure 22 have also been connected to the lower surface plate 21 at the intersecting support elements 23, 24 by means of intermittent welds 29 on both sides, which intermittent welds 29 are most advantageously 2 - 5 cm in length.

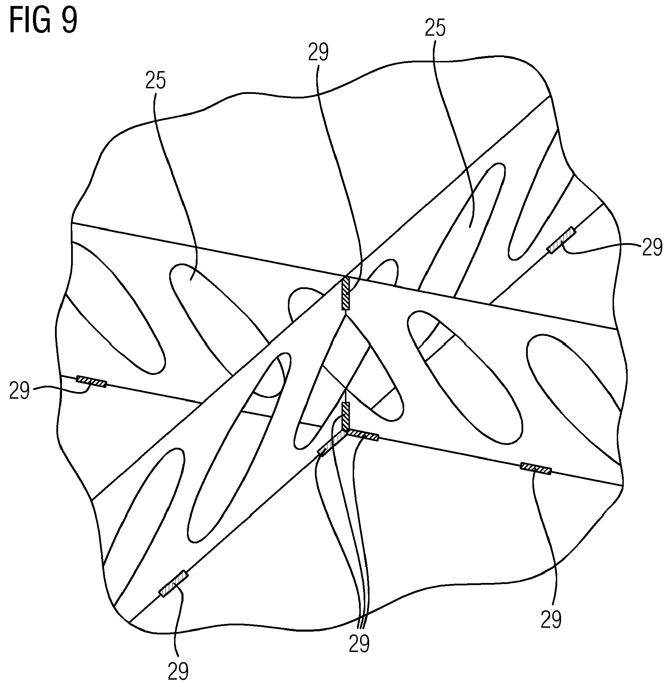

The openings 25, 45, 28 in the support elements 23, 24, 43, 44 are essentially elliptic, such as most advantageously round or ellipses, superelliptic such as squircles, ovals or combinations of these. The openings 25, 45, 28 in the support elements 23, 24, 43, 44 have been placed in the support element 23, 24, 43, 44 in the longitudinal direction of the support element 23, 24, 43, 44 in parallel with each other or at least partially on top of each other (cf. the detail shown in FIG 9 of the alternative method of implementation of the openings 25, 28 and described in more detail in connection with the explanation of FIG 9).

The size of individual openings 25, 45, 28 in the support elements 23, 24, 43, 44 is 5 - 400 cm². The openings 25, 45, 28 in the support elements 23, 24, 43, 44 have most advantageously been arranged so that they form at least one flow-through channel for warm exhaust gas P for the heating of essentially the entire bottom 2 and alternatively also for the heating of one side or both sides 3, 4.

The openings 28 in the support elements 23, 24 above the frame beams 10 are lower at the frame beam 10 than outside the frame beam 10 (see FIG 3, 4 and 5). Correspondingly, the openings 45 in the sides 3, 4 are smaller than the openings 25, 25 in the honeycomb structure 22 due to the lowness of the support elements 43, 44. The openings 25, 45, 28 in the support elements 23, 24, 43, 44 have most advantageously been made to enable the flow of warm exhaust gas P essentially to the entire area of the bottom 2 and sides 3, 4. The exhaust gas is pushed to the tipper body 1 most preferably from the front part of the honeycomb structure 22. The exhaust gas exits the bottom 2 most advantageously from the back part and sides 3, 4 of the honeycomb structure 22 through openings, which are most preferably located in the upper part of the back part of the sides. The openings 25, 45 in the support elements 23, 24, 43, 44 are manufactured most preferably by cutting with laser or a water jet. Smaller openings with a diameter of for example less than 2 - 3 cm can also be made by punching.

FIG 9 shows detail VIII, in other words an alternative embodiment of the honeycomb structure 22, where the openings 25 of the support elements 23, 24 are most advantageously located, in addition to the area between the intersections of the support elements 23, 24, also at the intersections of the support elements 23, 24.

In all of the embodiments described above, the support elements 23, 24 are connected to each other and to the lower surface plate 21 most advantageously by means of intermittent welds (mig/mag). It is possible to make the welds manually, but it is naturally most advantageous to use a welding robot. The cross section of the support elements 24, 43, 43 and 44 is most advantageously a rectangle, but it can be other, for example in the shape of an I, L, C, Z, X, V, Y or O or wave-form, for example in the shape of a part of a sine wave.

In order to recondition the tipper body 1, the upper bottom plate 20 of the tipper body 1 can be removed from the honeycomb structure 22 by cutting, after which the new upper bottom plate 20 is fastened by welding to replace the removed upper bottom plate 20.

In an earth transport machine, comprising a truck or corresponding transport machine equipped with tipping and configured to move soil material, a tipper body 1 according to the present invention is used.

The invention should not be understood to be limited only by the below claims, but the invention is to be understood to include all their legal equivalents and the combinations of the embodiments presented.

### List of reference numbers used:

- X: distance
- P: exhaust gas
- F: force
- L1: length
- L2: width
- L3: height
- L4: width
- 1: tipper body
- 2: bottom
- 3: side
- 4: side
- 5: end board
- 6: rounding
- 7: load space
- 10: frame beam
- 20: upper surface plate
- 21: lower surface plate
- 22: honeycomb structure
- 23: support element
- 24: support element
- 25: opening
- 26: fastening
- 27: outer edge
- 28: opening
- 29: intermittent weld
- 40: honeycomb structure
- 41: inner surface plate
- 42: outer surface plate
- 43: support element
- 44: support element
- 45: opening
- 50: load

## Claims

1. A tipper body (1), which comprises a bottom (2) and sides (3, 4) connected to the bottom (2) as well as an end board (5), which together specify the load space (7), **characterised in that** the bottom (2) comprises a honeycomb structure (22), which comprises an upper surface plate (20) fastened essentially only by its outer edges (27) to the honeycomb structure (22), a lower surface plate (21) and between these a number of intersecting support elements (23, 24), which contain a number of openings (25, 28), at least some which have been arranged to make the honeycomb structure (22) essentially elastic in the loading direction of the load space (7).

2. A tipper body (1) according to claim 1, where the upper surface plate (20) of the honeycomb structure (22) is essentially convex to the direction of the load space (7).

3. A tipper body (1) according to claim 1 or 2, where the upper surface plate (20) of the honeycomb structure (22) is essentially cup-like to the direction of the load space (7).

4. A tipper body (1) according to claim 2 or 3, where the upper surface plate (20) has been pre-tensioned to be convex or cup-like.

5. A tipper body (1) according to any one of the claims 1 - 4, where the upper surface plate (20) of the honeycomb structure (22) is a metal plate treated with a heat treatment method that increases hardness, such as hardening, or comprises such metal plate.

6. A tipper body (1) according to any one of the claims 1 - 5, where the outer edges (27) of the upper surface plate (20) of the honeycomb structure (22) have been connected to the honeycomb structure (22) by means of a continuous welded joint.

7. A tipper body (1) according to any one of the preceding claims, where at least some of the support elements (23) in the honeycomb structure (22) are longitudinal support elements (23) with respect to the tipper body (1), in addition to which one or both of the longitudinal outer edges (27) of the upper surface plate (20) have been adapted to set essentially one upon the other with the upper edge of such longitudinal support element(23), in which case the longitudinal support element (23) serves as a root support for the welded joint.

8. A tipper body (1) according to any one of the preceding claims, where the intersecting support elements (23, 24) of the honeycomb structure (22) have been connected to each other by means of a form-restricted connection, most advantageously by means of a number of finger joints (30).

9. A tipper body (1) according to any one of the preceding claims, where the support elements (23, 24) of the honeycomb structure (22) have been connected to each other at the upper and lower edge of the intersecting support elements (23, 24) by means of intermittent welds (29) on both sides, which intermittent welds (29) are most advantageously 2 - 5 cm in length.

10. A tipper body (1) according to any one of the preceding claims, where the support elements (43, 44) of the honeycomb structure (22) have been connected to the lower surface plate (21) at the intersecting support elements (23, 24) by means of intermittent welds (29) on both sides, which intermittent welds (29) are most advantageously 2 - 5 cm in length.

11. A tipper body (1) according to any one of the preceding claims, where one side (3, 4) or both sides (3, 4) comprise a honeycomb structure (40), which comprises an inner surface plate (41), an outer surface plate (42) and between these a number of intersecting support elements (43, 44).

12. A tipper body (1) according to claim 11, where some of the support elements (43) of the side (3, 4) or sides (3, 4) serve as an extension to the support elements (23) of the honeycomb structure (22), most advantageously to the transversal support elements (23) of the tipper body (1).

13. A tipper body (1) according to claim 12, where at least some of the support elements (43) of the side (3, 4) or sides (3, 4) serving as an extension are of the same piece with the support elements (23) of the honeycomb structure (22) or are welded to them.

14. A tipper body (1) according to any one of the preceding claims, where the openings (28) in the support elements (23, 24) are lower at the frame beam (10) than outside the frame beam (10).

15. An earth transport machine comprising a truck or transport machine equipped with tipping and/or a tipper body front wall that pushes the load away, configured to move soil material, **characterised in that** in addition to this the earth transport machine comprises a tipper body (1) according to any one of the claims 1 - 14.
